# EUROPÄISCHE PATENTSCHRIFT

(11) **EP 2 188 568 B1**
(45) Veröffentlichungstag und Bekanntmachung des Hinweises auf die Patenterteilung: **27.06.2012**
(21) Anmeldenummer: 08784728.1
(22) Anmeldetag: 11.07.2008
(51) Int. Cl.: F22B 1/28, F22B 27/08, A47J 31/54, H05B 3/40, H05B 3/46

(54) **KOMPAKTE HOCHDRUCKFÄHIGE SPIRALDURCHFLUSS-HEIZEINHEIT**
COMPACT SPIRAL-THROUGHFLOW HEATING UNIT WHICH CAN OPERATE AT HIGH PRESSURES
UNITÉ CHAUFFANTE À ÉCOULEMENT EN SPIRALE, COMPACTE ET APTE À FONCTIONNER À HAUTE PRESSION

(30) Priorität: 24.07.2007 DE 102007034370
(43) Veröffentlichungstag der Anmeldung: 26.05.2010
(73) Patentinhaber: Bleckmann GmbH & Co. KG, 5112 Lamprechtshausen (AT)
(72) Erfinder: REICHL, Martin, A-5152 Michaelbeuren (AT); PLESCHINGER, Andreas, A-5102 Anthering (AT)
(74) Vertreter: Eisenführ, Speiser & Partner
(86) Internationale Anmeldenummer: PCT/EP2008/005689
(87) Internationale Veröffentlichungsnummer: WO 2009/012904

(56) Entgegenhaltungen:
- EP-A- 0 485 211
- WO-A-2006/129511
- WO-A-2007/039683
- FR-A- 2 855 359
- FR-A- 2 891 688

## Beschreibung

Die vorliegende Erfindung betrifft eine Spiraldurchfluss-Heizeinheit für elektrische Geräte zur Bereitung von Heißgetränken gemäß Anspruch 1, das insbesondere zur wahlweisen Erzeugung von Heißwasser oder Dampf bei Drücken bis zu 15 bar und mehr betreibbar ist. Die Erfindung betrifft weiter ein kompaktes hydraulisches Durchfluss-Heizsystemmodul nach Anspruch 13 mit der hydraulischen Spiraldurchfluss-Heizeinheit den für elektrischen Geräte zur Bereitung von Heißgetränken, wie Kaffeemaschinen des Typs Espresso- oder Kaffeemaschinen für Kaffeepads.

Solche elektrische Geräte sind z.B. in den Schriften WO 2007/039683, FR 2 855 359 und FR 2891688 offenbart.

### Hintergrund

Elektrische Geräte zur bzw. mit integrierter Heißwasser- bzw. Dampfableitung finden sich in zahlreichen Haushaltsgeräten mit Heißwasser- bzw. Dampferzeugung, beispielsweise Geräte zur Heißgetränkezubereitung. Am Beispiel der bekannten Kaffee- bzw. Espressomaschinen, die nach unterschiedlichen Prinzipien arbeiten, seien die hier interessierenden Aspekte kurz erläutert.

Am wohl bekanntesten sind drucklos arbeitende Kaffeemaschinen, bei denen Wasser aus einem Vorratsbehälter durch eine Heizvorrichtung, üblicherweise ein elektrisch beheiztes Rohr, zu einem Filterhalter mit Kaffeefilter und darin befindlichem Kaffeepulver geführt wird. Infolge von Dampfentwicklung im beheizten Rohr wird erwärmtes Wasser über eine Steigleitung zu und aus einem Auslauf gedrückt, um Kaffeepulver im Kaffeefilter mit dem Heißwasser zu überbrühen. Aus dem Kaffeefilter fließt der gebrühte Kaffee unter Einfluss des atmosphärischen Drucks in ein entsprechendes Auffanggefäß.

Bei Espressomaschinen wird heißes Wasser mit einer Temperatur um die 90°C unter deutlich höheren Druck von etwa 15 bar durch in einer Kaffeepulveraufnahme befindliches Kaffeepulver gedrückt. Dabei wird das kalte Wasser aus einem Wasserbehälter einer elektromotorisch angetriebenen Pumpe zugeführt, mittels der das Wasser dann unter dem benötigten Druck durch eine elektrische Heizvorrichtung, üblicherweise einem so genannten Thermoblock, der Kaffeepulveraufnahme, wie zum Beispiel einer Brühgruppe oder einem Siebträger, zugeführt. Zum Aufbau und Erhalt des gewünschten hohen Drucks im Bereich des Kaffeepulvers befindet sich die Kaffeepulveraufnahme in einer als Druckraum ausgelegten Brühkammer, die während des eigentlichen Brühvorgangs gegenüber dem atmosphärischen Druck abgedichtet ist. Aus einem entsprechenden Auslass der Brühkammer wird der gebrühte Espresso in ein Gefäß abgegeben.

Eine weitere immer populärere Kaffeemaschinenart ist zwischen der herkömmlichen drucklosen Kaffeemaschine und Espressomaschine angesiedelt. Dabei wird das Wasser zur Zubereitung des Kaffees zuerst aus dem Wasservorratsbehälter in einen beheizbaren Zwischenbehälter geführt und anschließend als erhitztes Wasser über eine elektromotorisch angetriebene Pumpe unter erhöhtem Druck von 2 bis 3 bar einer Kaffeepulveraufnahme zugeführt. Dabei befindet sich, anders als bei der oben erwähnten Espressomaschine, kein loses Kaffeepulver in der Brühkammer sondern der Kaffee ist in Form eines so genannten Kaffeepads vorportioniert. Dabei handelt es sich um Kaffeepulver in verdichteter Form, das z. B. mit Filterpapier umgeben oder in Aluminiumfolie verkapselt ist und so vorportioniert bequem in die entsprechende Aufnahme der Brühkammer eingesetzt werden kann. Die Brühkammer wird üblicherweise mit einer mechanisch Abdeckung verschlossen und verriegelt, sodass der abgedichteter Druckraum entsteht, in den über eine Zuführung in der Abdeckung das heiße Wasser unter Druck gedrückt wird und aus einem entsprechenden Auslass der Brühkammer der gebrühte Kaffee wieder in ein Trinkgefäß abgegeben werden kann.

Zur Bereitung des heißen Wassers bzw. Heißwassers befindet sich in den bekannten mit Druck arbeitenden Kaffeemaschinen üblicherweise als Heizeinrichtung ein Wärmetauscher in Form eines Durchlauferhitzer. Der Wärmetauscher weist im Allgemeinen ein elektrisches Heizelement und einen Wasserkreislauf auf, der mit diesem Heizelement thermisch verbunden ist, wobei das Wasser nur dann zirkuliert, wenn eine Pumpe in Betrieb ist. Der Wärmetauscher mit seinem elektrischen Heizelement, Befestigungsmitteln und elektrischen Sicherheitselementen bildet üblicherweise eine Unterbaugruppe, die Thermoblock genannt wird. Der Thermoblock besteht meist aus Aluminiumguss mit einem gut Wärme leitend mit dem Block verbundenes Heizelement wie ein Rohrheizkörper, wobei innerhalb des Thermoblocks Wasserführungskanäle vorgesehen sind. Zwar lässt sich sowohl im Hinblick auf Dampfentwicklung als auch auf die Stabilität der Brühtemperatur mit einem Thermoblock eine sehr gut kontrollierte Erwärmung des Wassers erreichen, aber wesentliche Nachteile bestehen in der aufwendigen Herstellung sowie der hohen thermischen Masse, d. h. der nicht zu vernachlässigende Wärmekapazität in Relation zur eingesetzten elektrischen Leistung des Thermoblock, was lange Aufheizzeit bzw. Aufwärmzeit nach dem Einschalten der Maschine bedingt, bis das erste Heißgetränk bezogen werden kann. Andererseits ermöglicht gerade die große thermische Masse, mittels gespeicherter Wärme eine Temperaturstabilität bzw. Temperaturkonstanz sicherzustellen. D. h., die Aufheizzeit kann hier nur über entsprechend überdimensionierte Heizelemente erreicht werden.

Die EP 1 076 503 B1 zeigt einen Wassererhitzer für ein elektrisches Haushaltsgerät mit einem zylindrischen Körper mit vertikaler Achse, der eine Kammer begrenzt und der einen Einlass zum Einleiten von Wasser in die Kammer und eine zum Körper gehörende elektrische Heizvorrichtung mit einem Heizelement mit aufgedrucktem elektrischen Widerstand zum Erhitzen des in die Kammer eingeleiteten Wassers aufweist. Der Körper besitzt weiter auch einen Auslass für die Abgabe heißen Wassers oder in der Kammer gebildeten Dampfs. Das Heizelement ist als gedruckter Widerstand in Form einer Schicht oder Platte ausgebildet, die sich über einen Teil der Höhe der Längswand des Körpers im Wesentlichen vom unteren Ende des Körpers ausgehend erstreckt. Weiter ist eine Wärmeschutzvorrichtung vorgesehen, welche die Stromversorgung des Heizelements unterbrechen kann, wenn der Wasserstand in der Kammer unterhalb des oberen Endes der Schicht liegt, wodurch die bessere Absicherung der Anordnung gegen Überhitzungsschäden bei unsachgemäßem Betrieb wie Trockenlaufen beabsichtigt ist.

### Überblick

Eine Aufgabe der Erfindung besteht daher darin, die bekannten Heizvorrichtungen zu verbessern. Insbesondere besteht Bedarf hinsichtlich eines Heizsystems, bei dem die Bauteile, die zur Beheizung von Wasser in einem Gerät zur Heißgetränkebereitung, wie etwa einer Kaffeemaschine, benötigt werden, in einer kompakten Baugruppe vereinen zu können.

Besonderes Interesse besteht dahingehend, bei einem Heizsystem für die genannten Zwecke den Zeitablauf vom Einschalten des Systems bis zur Möglichkeit eines ersten Bezuges einer ersten Tasse so kurz wie möglich zu halten.

Die vorstehende Aufgabe wird gelöst durch eine Spiraldurchfluss-Heizeinheit gemäß Anspruch 1 sowie durch ein hydraulisches Durchfluss-Heizsystemmodul nach Anspruch 13. Einzelne Ausführungsbeispiele sowie vorteilhafte Weiterbildungen finden sich in den jeweils angeschlossenen Unteransprüchen.

In der Grundform der erfindungsgemäßen Spiraldurchfluss-Heizeinheit für elektrische Geräte zur Bereitung von Heißgetränken weist diese auf: einen rohrförmigen Träger mit wenigstens einer elektrischen Heizleiterstruktur in Dickschichttechnik auf seiner Außenseite und je einem an seinen beiden Enden umlaufenden nach Außen weisenden Flansch, ein in dem rohrförmigen Träger angeordnetes Kernelement mit wenigstens einem auf der Mantelfläche des Kerns spiralförmig umlaufenden Steg, wobei zwei benachbarte Stegflanken mit der Mantelfläche eine Strömungsrille bilden, die nach Außen durch die Innenseite des rohrförmigen Trägers im Wesentlichen dicht zu einem Strömungskanal abgeschlossen ist, ein erstes und ein zweites Endstück mit je einem mit dem Strömungskanal kommunizierenden Anschluss, wobei die Endstücke jeweils an ihrem Ende des rohrförmigen Trägers mit dem Kernelement fest verbunden sind, und wobei die aus den Endstücken und dem Kernelement bestehende Einheit aus wenigstens zwei Teilen besteht, die mittels wenigstens einer Schnappverbindung miteinander in Eingriff stehen und mechanisch derart verspannt sind, dass zwischen dem rohrförmigen Träger und den jeweiligen Endstücken angeordnete Dichtungen mit einem ausreichenden Pressdruck belastet sind, sodass die Dichtungen wasser- und dampfdicht sind.

In einer ersten Ausführung besteht das erfindungsgemäße Heizsystemmodul aus einem hydraulischen Strang mit einem Durchflussmesser, einer Pumpe, einer erfindungsgemäßen Spiraldurchfluss-Heizeinheit, einem Dampfspannungsventil als Komponenten, wobei die Komponenten jeweils über druckbelastbare Schlauchverbindungen verbunden sind, und wobei die Pumpe im Wesentlichen über jeweils an den Endstücken der Spiraldurchfluss-Heizeinheit vorgesehenen Befestigungselementen parallel zu der Heizeinheit, und der Durchflussmesser sowie das Dampfspannungsventil jeweils im Bereich eines Endstücks angeordnet sind. Somit sind die einzelnen Bauteile, die zur Beheizung des Wassers in einem Gerät zur Heißgetränkebereitung, wie einer Kaffeemaschine, benötigt werden, zu einer kompakten Baugruppe bzw. einem Systemmodul vereint. Dies ermöglicht die Bereitstellung einer platzsparenden und montagefreundlichen Heizsystemmoduls für die Fertigung beliebiger Ausführungen derartiger Heißgetränkegeräte, wobei aufgrund der äußerst platz- und raumsparenden Ausführung dem Design für das Heißgetränkegerät kaum Grenzen gesetzt werden.

In einer alternativen Ausführung besteht das erfindungsgemäße Heizsystemmodul aus einem hydraulischen Strang mit einem Durchflussmesser, einer Pumpe, einer erfindungsgemäßen Spiraldurchfluss-Heizeinheit, einem Dampfspannungsventil als Komponenten, wobei die Komponenten jeweils über druckbelastbare Schlauchverbindungen verbunden sind, und wobei die Komponenten mit einem gemeinsamen Trägerelement über jeweilige Befestigungselemente fest verbunden sind, wobei die Pumpe im Wesentlichen parallel zu der Heizeinheit, und der Durchflussmesser sowie das Dampfspannungsventil jeweils im Bereich eines Endstücks angeordnet sind. Neben den vorstehend genannten Vorteilen der ersten Ausführung bietet die alternative Ausführung noch mehr Flexibilität hinsichtlich des Einbaus in ein Heißgetränkegeräte, wobei das gemeinsame Trägerelement als sogenannte Montageschale individuell auf den Einbau.

### Kurze Beschreibung der Zeichnungen

Weitere vorteilhafte Ausgestaltungen sowie ein Ausführungsbeispiel der vorliegenden Erfindung werden nachstehend im Zusammenhang mit den Zeichnungsfiguren erläutert. In diesem Zusammenhang ist anzumerken, dass sich die in der Beschreibung des Ausführungsbeispiels verwendeten Begriffe "links", "rechts", "unten" und "oben" auf die jeweilige Zeichnungsfigur mit normal lesbaren Bezugszeichen und Figurenbezeichnungen beziehen. Hierbei ist:
- Fig. 1: zeigt in einer dreidimensionalen Ansicht ein Ausführungsbeispiel der erfindungsgemäßen Spiraldurchfluss-Heizeinheit, wobei das Trägerrohr der elektrischen Dickschichtheizung zur Sicht auf das Kernelement ungefähr hälftig aufgebrochen dargestellt ist;
- Fig. 2a: zeigt eine erste Längsschnittdarstellung mittig durch die Spiraldurchfluss-Heizeinheit der Fig. 1;
- Fig. 2b: zeigt eine zweite Längsschnittdarstellung durch die Spiraldurchfluss-Heizeinheit, wobei der Schnitt um 90° gegenüber der Darstellung in Fig. 2a um die Längsachse der Heizeinheit gedreht ist;
- Fig. 3a: zeigt eine dreidimensionale Ansicht des Kernelements mit den Wasserführungsrille der Spiraldurchfluss-Heizeinheit der Fig. 1 in Alleinstellung;
- Fig. 3b: zeigt eine Längsschnittdarstellung mittig durch das Kernelement der Fig. 3a;
- Fig. 4a: zeigt eine dreidimensionale Ansicht des rohrförmigen Trägers der Spiraldurchfluss-Heizeinheit der Fig. 1 in Alleinstellung;
- Fig. 4b: zeigt eine Längsschnittdarstellung mittig durch den rohrförmigen Träger der Fig. 4a;
- Fig. 5a: zeigt eine dreidimensionale Ansicht eines der beiden Deckel mit einem Anschluss für die Spiraldurchfluss-Heizeinheit der Fig. 1 in Alleinstellung;
- Fig. 5b: zeigt eine Draufsicht von Außen auf den Deckel der Fig. 5a;
- Fig. 5c: zeigt eine Längsschnittdarstellung entlang der Schnittfläche CC* durch den Deckel der Fig. 5a bzw. 5b;
- Fig. 6: zeigt ein erstes Ausführungsbeispiel eines hydraulischen Strangs, bei dem alles Systemkomponenten für ein vollständiges Heizsystem direkt an den erfindungsgemäßen Durchflusserhitzer angebaut sind;
- Fig. 7: zeigt ein zweites Ausführungsbeispiel eines hydraulischen Strangs, bei dem alle Systemkomponenten für ein vollständiges Heizsystem nicht direkt an den erfindungsgemäßen Durchflusserhitzer angebaut sind sondern mit einer Montageschale als Träger, der an die individuell Einbausituation der jeweiligen Anwendung abgestimmt ist; und
- Fig. 8: zeigt ein Blockschaltbild mit den Systemkomponenten des hydraulischen Strangs der Fig. 6 bzw. 7.

### Ausführungsbeispiele

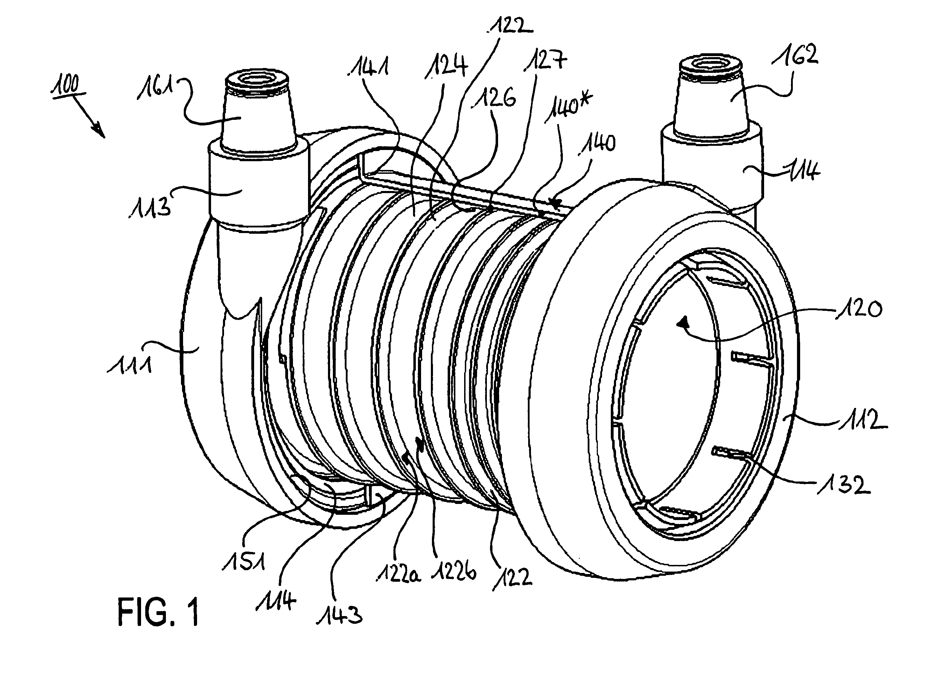

Fig. 1 zeigt in einer dreidimensionalen Ansicht ein Ausführungsbeispiel der erfindungsgemäßen Spiraldurchfluss-Heizeinheit 100 mit zwei Deckeln bzw. Endstücken 111 bzw. 112, die aus einem hitzebeständigen, insbesondere für die Belastung durch Dampf geeigneten Kunststoff bestehen, als Beispiele seien PPA (Polyphtalamid). PPE (Polyphenylenether), PPS (Polyphenylsulfid) und PTFE genannt. Die Endstücke 111 (bzw. 112) sind jeweils an einem Ende eines Kernelements 120 mittels einer Schnappverbindung 131, 132 gegen einen auf dem Kernelement 120 angeordneten rohrförmigen Träger 140 gepresst bzw. spannen diesen zischen sich ein und fixieren so die gesamte Anordnung.

Das rohrförmige Kernelement 120 ist ebenfalls aus einem hitzebeständigen, insbesondere für Dampf geeigneten Kunststoff, wie dem oben genannten PPA, PPE, PPS oder PTFE gefertigt und weist einen spiralförmig umlaufenden Steg 122 auf, wobei zwei benachbarte Flanken 122a, 122b des Stegs 122 eine Wasser führende Rille 124 ausbilden, die ebenfalls spiralförmig um das Kernelement 120 herum verläuft. Bevorzugt werden die Endstücke sowie das Kernelement einstückig als Kunststoffspritzgussteile hergestellt.

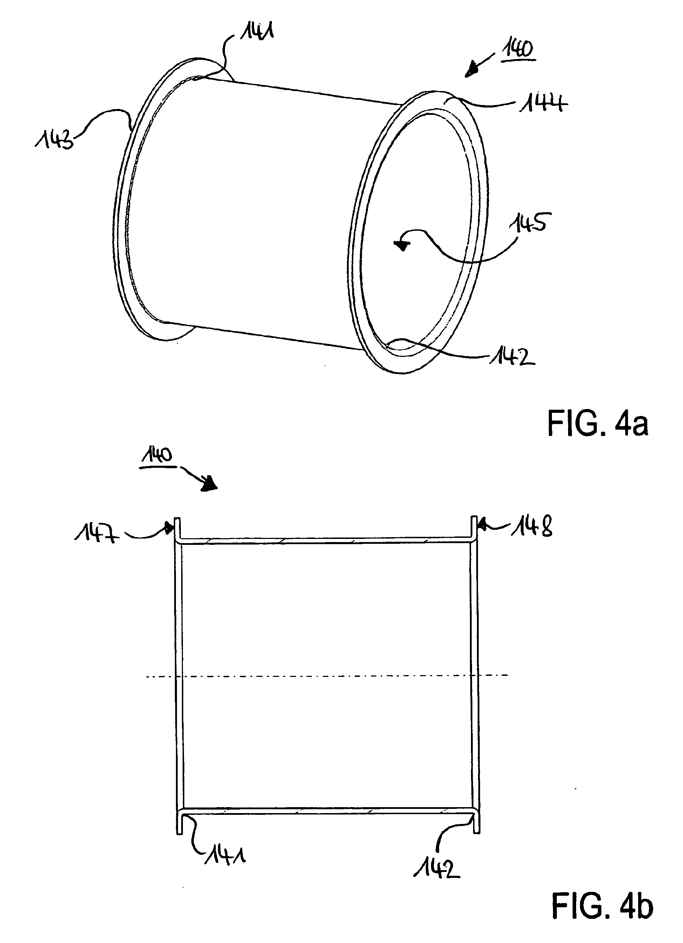

An Hand der aufgebrochenen Schnittkante 140* des rohrförmigen Trägers 140 ist zu erkennen, dass die Wasser führende Rille bzw. Wasserführungsrille 124 nach Außen hin durch die Innenfläche 145 des rohrförmigen Trägers 140 zu einem Strömungskanal 126 abgeschlossen wird. Hier sei angemerkt, dass eine Presspassung an den Kontaktflächen 127 zwischen dem Steg 122 und der Innenfläche 145 des Trägerrohres 140 für die Funktion des der Heizeinheit 100 ausreichend ist, da der Strömungswiderstand eines Zuges, d. h. ein 360° Umlauf, des Strömungskanals 126 wesentlich geringer als der Strömungswiderstand eines Spalts zwischen dem Steg 122 und der Innenfläche 145 (siehe Fig. 4a) des Trägerrohres 140 ist.

Der rohrförmige Träger 140 besitzt an jedem seiner beiden Enden 141 und 142 (in Fig. 1 verdeckt) einen nach Außen weisenden Flansch 143 bzw. 144 (in Fig. 1 ebenfalls verdeckt). In Fig. 1 ist am linken Deckel bzw. Endstück 111 zu erkennen, dass die in Richtung des Deckels 111 weisende Flanschfläche in einer umlaufenden Ausnehmung 114 des Endstücks 111 liegt, wobei sich zwischen der Flanschfläche 116 des Deckels 111 und der Flanschfläche des Trägerrohrs 140 eine O-Ringdichtung 151 (bzw. 152) als Dichtungselement befindet, das durch die mittels der Schnappverbindungen verspannte Anordnung derart komprimiert bzw. gepresst wird, dass die Heizeinheit 100 bei bestimmungsgemäßen Betriebsdrücken von mindestens 15 bar und mehr gegenüber heißem Wasser als auch Dampf dicht ist.

Jeder der Deckel 111 bzw. 112 besitzt einen Anschluss 113 bzw. 114 der für die Aufnahme eines hydraulischen Steckverbindungselements 161, 162 ausgelegt ist, um eine mit hohem Druck belastbare Verbindung mit einem entsprechenden Hochdruckschlauch zu anderen Systemkomponenten zu ermöglichen. Da derartige hydraulische Anschlusstechniken respektive Schlauchverbindungstechniken sowie Hochdruckschläuche im Bereich druckbelasteter Heißwassergeräte für den Fachmann bekannt und nicht wesentlich für das Verständnis der vorliegenden Erfindung sind, werden sie hier nicht näher beschrieben.

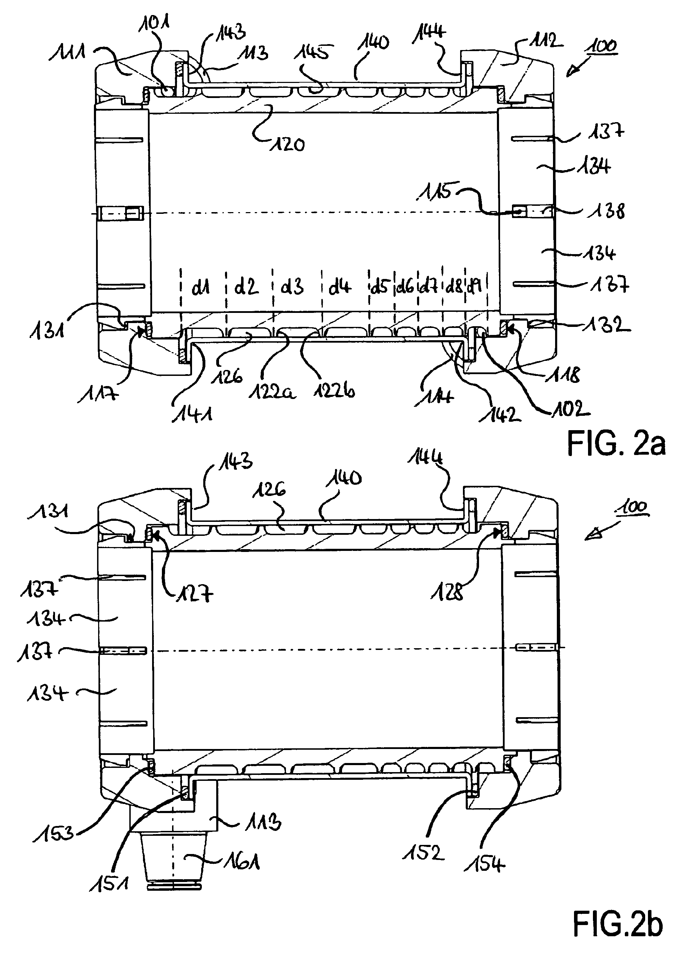

Figuren 2a und 2b zeigen jeweils eine Längsschnittdarstellung mittig durch die Spiraldurchfluss-Heizeinheit 100 der Fig. 1, wobei der Schnitt der Fig. 2b um 90° gegenüber der Darstellung des der Fig. 2a gedreht ist. An den Schnittdarstellungen ist zu erkennen, dass die Steigung des spiralförmigen Stegs 122 in Richtung eines Endes der Heizeinheit 100 abnimmt, d. h. eine geringere Steigung aufweist. Als Folge davon nimmt die Breite (d1, d2, ..., d9) der Wasserführungsrille 124 respektive der Querschnitt des Strömungskanals 126 in Richtung des Endstücks 112 hin ab, wodurch sich aufgrund des kontinuierlichen Volumenstromes zwangsläufig eine höhere Fließgeschwindigkeit für das erhitzte Wasser in der Heizeinheit zum Auslass hin einstellt.

Bestimmungsgemäß befindet sich der Auslass 102 der Heizeinheit 100 am Endstück 112, wo der Strömungskanal 126 den geringsten Strömungsquerschnitt aufweist, und demnach der Einlass 101 der Heizeinheit 100 am entsprechend anderen Endstück 111.

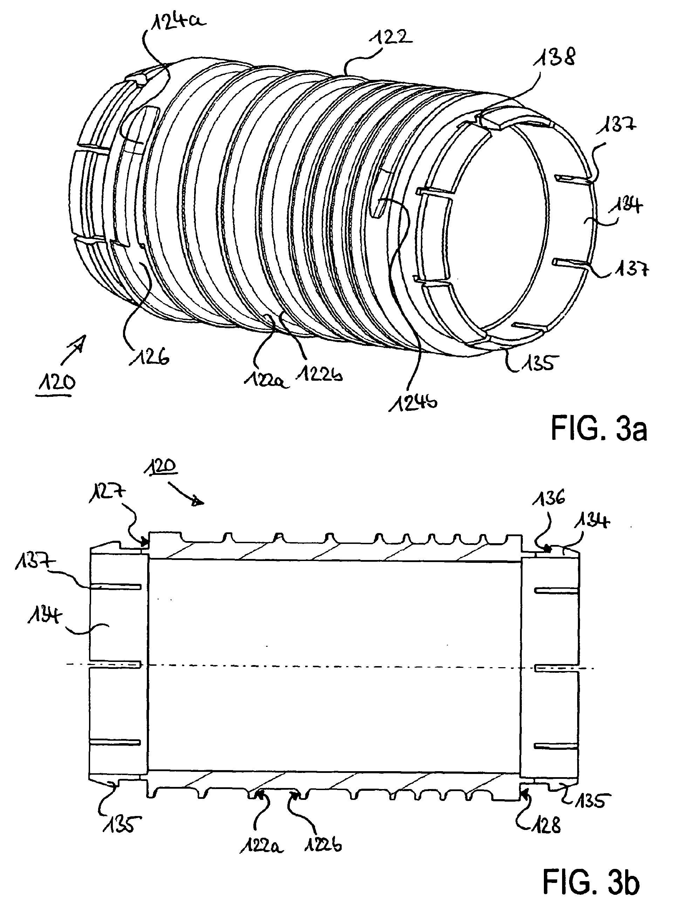

Fig. 3a zeigt eine dreidimensionale Ansicht des Kernelements 120 mit den Strömungsrillen 124 der Heizeinheit 100 der Fig. 1 in Alleinstellung und Fig. 3b eine Längsschnittdarstellung mittig durch das Kernelement 120 der Fig. 3a.

Am linken Ende des Kernelements 120 befindet der Anfangsbereich der Wasserführungsrille 124, die in diesem Anfangsbereich 124a deutlich schmäler ausgeführt ist als der sich unmittelbar daran anschließendende durch den spiralförmig um das Kernelement 120 verlaufenden Steg 122 gebildete eigentliche Strömungskanal 126, der dort seinen größten Querschnitt aufweist.

Die Wasserführungsrille 124 wird entlang der Außenfläche des Kernelements 120 durch den umlaufenden Steg 122 zum Anfangsbereich 124a der Wasserführungsrille 124 gegenüberliegenden Ende hin abnehmender Steigung durch jeweils zwei gegenüberliegende Stegflanken 122a und 112b als jeweils eine linke und rechte Begrenzung gebildet. Am auslassseitigen, rechten Ende des Kernelements 120 endet die Wasserführungsrille 124 bzw. der Strömungskanal 126 in einem Endbereich 124b, an dem der Strömungskanal 126 nach Zusammenfügung mit den in Fig. 1 gezeigten ringförmigen Deckeln bzw. Endstücken 111 bzw. 112 über entsprechend vorgesehene Bohrungen 101a, 102a mit dem Einlass bzw. Auslass kommunizieren.

An den jeweiligen Enden des Kernelements 120 befinden sich in regelmäßigem Abstand angeordnete entlang des Umfangs des Endes des Kernelements 120 verlaufende Federzungen mit Rasthaken 134. Wie anhand von Fig. 3b besser zu erkennen ist, verjüngt sich ein Federelement 134, d. h. seine auf die Längsachse des Kernelements 120 bezogene Material- bzw. Wandungsstärke pfeilförmig bzw. rampenförmig bzw. keilförmig zum Ende des Kernelements 120 hin.

Beim Zusammenfügen des Kernelements 120 und eines, beispielsweise in Fig. 1 dargestellten, Endstücks 111 (bzw. 112) dienen die Flanken des Rasthakens als schräg verlaufende, rampenartige gleitende Kontakt- und Druckfläche 135 dazu, den jeweiligen Rasthaken radial nach Innen weg zudrücken. In der bestimmungsgemäßen Endposition kann der Rasthacken dann mit seiner umlaufenden Schulter bzw. Kante 136 eine in dem jeweiligen Deckel bzw. Endstück vorgesehene umlaufende Kante derart hintergreifen, bzw. in die als Hinterschneidung ausgeführte Kante einrasten bzw. einschnappen und so die verrasteten bzw. eingeschnappten Teile dauerhaft fixieren.

Zwischen den einzelnen Rasthaken 134 befinden sich regelmäßige Aussparungen 137, die im Wesentlichen so zu einander beabstandet sind, dass die einzelnen Federelemente 134 eine ausreichende Flexibilität für das oben beschriebene Wegbiegen beim Durchführen des Einschnappens besitzen, aber andererseits eine ausreichende Steifigkeit aufweisen, um bei hergestellter Schnappverbindung genügende Stabilität für die dauerhafte Verbindung und Verspannung der Anordnung zu gewährleisten.

Wenigstens eine der Ausnehmungen 138 (siehe Fig. 3a und Fig. 2a) weist im Vergleich zu den anderen Ausnehmungen eine unterschiedliche Form auf, insbesondere unterschiedliche Breite auf, die genau auf die Breite einer an dem jeweiligen Deckel bzw. Endstück 111 bzw. 112 vorgesehene Führungsnase 115 abgestimmt ist, um eine Montage der Endstücke111 bzw. 112 mit einer vorbestimmten Orientierung zu dem Kernstück, insbesondere bei maschineller Fertigung, zu ermöglichen. Die vorbestimmte Orientierung zielt darauf ab, dass die Bohrung 101a, 102a im Einlassanschluss 110 bzw. Auslassanschluss 102 korrekt in den jeweiligen Anfangsbereich bzw. Endbereich der Wasserführungsrille 126 einmünden.

Fig. 4a zeigt eine dreidimensionale Ansicht des rohrförmigen Trägers 140 der Spiraldurchfluss-Heizeinheit 100 der Fig. 1 in Alleinstellung und Fig. 4b eine Längsschnittdarstellung mittig durch den rohrförmigen Träger 140 der Fig. 4a.

Wie bereits erwähnt besitzt der rohrförmige Träger 140 ein erstes Ende 141 und ein zweites Ende 142 an dem jeweils ein umlaufender nach Außen weißender Flansch 143 bzw. 144 vorgesehen ist. Zur Herstellung einer jeweils gegenüber Wasser bzw. Dampf dichten Schnittstelle zwischen dem rohrförmigen Träger 140 und dem aus den Endstücken 111 bzw. 112 und dem Kernelement 120 gebildeten Körper der Heizeinheit 100 zu bilden, besitzt der Flansch 143 bzw. 144 an jedem Ende des rohrförmigen Trägers eine im Wesentlichen von dem jeweiligen Ende des rohrförmigen Trägers wegweisende ringförmig umlaufende Flanschfläche 147 bzw. 148.

Der rohrförmige Träger 140 ist bevorzugt aus einem ferritischen Edelstahl hergestellt, kann aber in einer vorteilhaften Weiterbildung auch aus zwei unterschiedlichen Metallen, die beispielsweise mittels Plattierung mechanisch miteinander verbunden sind, hergestellt sein.

Es ist jedenfalls bevorzugt, dass die im bestimmungsgemäßen Betrieb der Heizeinheit 100 mit dem zu erhitzenden Wasser in Kontakt stehende Innenfläche 145 des rohrförmigen Trägers 140 aus einem korrosionsbeständigen Metall gefertigt ist. Selbstverständlich ist es auch möglich die Innenfläche 145 mit einer zusätzlich Funktionsschicht zu versehen, welche eine Kalkanhaftung verhindert. Als vorteilhaft haben sich hier insbesondere Schichten, welche die freie Oberflächenenergie absenken, wie z. B. PTFE Beschichtungen basierend auf LXE (liquid wax ester) Systemen, erwiesen.

Der rohrförmige Träger 140 trägt wenigstens eine in Dickschichttechnik realisierte, elektrische Heizleiterschicht als Heizelement und dient gleichzeitig zur Wärmeübertragung von dem wenigstens einen Heizelement auf das zu erwärmende Wasser im Strömungskanal 126 im Inneren des rohrförmigen Trägers 140. Bevorzugt besteht das Trägerrohr aus einem ferritischen Edelstahl, wobei die Innenoberfläche 145 als die dem Wasser als zu beheizendem Medium zugewandte Seite (d.h., Mediumseite) bevorzugt mit einer Kalk abweisenden und/oder korrosionsbeständigen Beschichtung.

Die wenigstens eine Heizleiterschicht weist bevorzugt eine Dicke bzw. Stärke im Bereich von 5 bis 150 µm auf. Bevorzugt besteht die Heizleiterschicht aus einem der folgenden Materialen oder einer wahlweisen Kombination davon: Metalle auf Nickel-Basis, Eisen-Basis, Aluminium-Basis, Kupfer-Basis, Kobalt-Basis, Molybden-Basis und Titan-Basis und Kombinationen davon. Auch Cermets und Keramiken wie Bariumtitanat sind denkbar, besonders bevorzugt kommt NiCr 8020 und Kanthal zur Anwendung.

In einer besonderen Ausführung besteht das Trägerrohr aus wenigstens einer ersten und einer zweiten Verbund bildenden Metallschicht. Die erste innen liegende Metallerschicht steht im bestimmungsgemäßen Betrieb mit dem Wasser in Kontakt und besteht aus einem Metall, das gegenüber Wasser, insbesondere Dampf, weitgehend korrosionsbeständig ist. Die zweite außen liegende Metallschicht besteht aus Aluminium oder einer Legierung von Aluminium mit Kupfer, Magnesium, Mangan, Silizium, Eisen, Titan, Beryllium, Chrom, Zink, Zirkon und/oder Molybdän und trägt das elektrische Heizsystem als funktionelle Schichten. Bevorzugt ist ein dauerhafter Verbund zwischen der ersten Metallschicht und der zweiten Metallschicht mittels Walzen oder Walzplattieren hergestellt.

Der Dickschichtaufbau kann im Bereich der im Betrieb Strom und Spannung führenden Heizleiterschicht oder der später erläuterten Leiterstrukturen gegenüber dem Trägerrohr eine elektrisch isolierende Schicht aufweisen. Die elektrisch isolierende Schicht weist eine Dicke im Bereich von 0,1 bis 0,3 mm auf.

Weiter kann der Dickschichtaufbau eine oder mehrere weitere Funktionsschichten aufweisen, die beispielsweise als Leiterbahnschichten für elektrische Signale ausgeführt sind und die mit Schaltungselementen zur Absicherung, Überwachung, Steuerung, Regelung oder einer Kombination davon verschaltet sind. Dabei kann eine der weiteren Funktionsschichten in derselben durch die Heizleiterschicht definierten Schichtebene und/oder auch über oder unter der durch die Heizleiterschicht definierten Schichtebene angeordnet sein. So können beispielsweise elektrische Signale zur Temperaturüberwachung und/oder Temperaturmessung führende Leiterbahnen entsprechende Sensor-Bauelemente, wie zum Beispiel ein NTC-Widerstand, bevorzugt in SMD-Technik, kontaktieren, die auf oder in der Nähe einer Heizleiterbahn der Heizleiterschicht angeordnet sind.

Die genannten Leiterbahnschichten weisen eine Dicke bzw. Stärke im Bereich von 5 bis 150 µm auf. Bevorzugt bestehen die Leiterbahnschichten aus einem der folgenden Materialien oder einer wahlweisen Kombination davon: Metalle auf Kupferbasis und Silberbasis oder Ähnlichem Besonders bevorzugt wird CuNi10 und CuNiZn verwendet.

An dieser Stelle sei noch auf eine besondere Weiterbildung der elektrischen Heizeinheit mit der elektrischen Heizleiterstruktur in Form der Dickschichtheizung zum Schutz des Heizelements und der Umgebung sowohl im sachgemäßen als auch im unsachgemäßen Betrieb, insbesondere im Hinblick auf Brandgefahr aber auch mechanische Schäden am Heizelement durch Überhitzung, hingewiesen.

Daher wird in einer besonderen Ausführung einer Absicherung und Steuerung des Durchflusserhitzers von einer entsprechend eingerichteten Steuerung der jeweilige Momentan-Widerstandswerts des wenigstens einen elektrischen Widerstandsheizelements der Dickschichtheizung erfasst. Weiter werden daraus zeitliche Änderungen des Widerstandswerts des wenigstens einen elektrischen Widerstandsheizelements bestimmt und die Leistung des Heizsystems basierend auf der jeweils aktuellen zeitlichen Änderung des Widerstandswerts gesteuert.

Als besonders einfacher Schutz gegen so genanntes Trocken- oder Leerlaufen des Heizsystems wird im Wesentlichen nach einer vorbestimmten systemabhängigen Zeitkonstante bzw. Anlaufzeit nach dem Einschalten des elektrischen Heizelements die zeitliche Änderung des Widerstandswerts des wenigstens einen elektrischen Widerstandsheizelements der Dickschichtheizung bestimmt. D. h., bevorzugt erfolgt beim Aufheizen während der Anlaufzeit noch keine Steuerung des elektrischen Heizelements im Sinne einer Betriebssteuerung und/oder Sicherung, wobei die Erfassung der zeitlichen Änderung des Widerstandswerts prinzipiell schon ab Einschalten möglich ist.

Entscheidend für die Länge der für das jeweilige Heizsystem vorbestimmte Anlaufzeit ist das Anlaufverhalten des Heizelementes und seine thermische Massen. Nach der Anlaufzeit bzw. Verzögerungszeit hat bzw. sollte bei ordnungsgemäßen Betrieb des Heizsystems die korrekte Betriebstemperatur vorliegen, wobei der ordnungsgemäße Betriebszustand daran zu erkennen ist, dass die zeitliche Änderung des elektrischen Widerstands gegenüber dem Vorliegen einer Störung wie Leerlaufen eine deutlich geringe Steigung auf. Somit kann nach dieser Verzögerungszeit mit einer einfachen Auswertung der aktuellen Steigung des Widerstandsverlaufs (dR(t)/dt) entsprechend reagiert, d. h. gesteuert werden. Es sei darauf hingewiesen, dass die Bewertung der aktuellen zeitlichen Änderung des Widerstandswerts als hoch oder gering bzw. niedrig prinzipiell einem Vergleich des aktuellen Wertes mit einem vorbestimmten bzw. systemabhängigen Wert entspricht. Die Auswertung für die entsprechende Steuerung des Heizsystems sieht beispielsweise wie folgt aus: Befindet sich nach der voreingestellten bzw. vorbestimmten Verzögerungszeit bzw. Anlaufzeit kein Wasser im Heizsystem, steigt der Widerstand weiter stark an (dR(t)/dt ist hoch) und das Heizelement wird entsprechend abgeschaltet, um eine Beschädigung durch Überhitzung zu vermeiden. Befindet sich dagegen genug Wasser im Heizsystem steigt der Widerstand langsamer (dR(t)/dt ist niedrig) bzw. bleibt nahezu konstant an und das Heizsystem kann weiter Heizleistung an das zu Wasser im System zur Erzeugung von Heißwasser oder Dampf abgeben.

Damit kann die Durchflussheizung relative einfach vor Schäden durch zu hohe Heizleitertemperaturen durch unsachgemäßen Betrieb, wie einem Betrieb ohne Wasser, geschützt werden. Dabei ist es insbesondere nicht notwendig, einen absoluten oder relativen Widerstandswert als Schaltschwelle festzulegen, der üblicherweise aufgrund zulässiger Wertestreuung keine zuverlässige Temperaturkontrolle bzw. Temperaturüberwachung zulässt. Mit anderen Worten, die vorstehende Schutzmaßnahme ist völlig unabhängig den Materialschwankungen des Heizleiters unterworfenen Temperaturschwellen.

In einer Ausführung der erfindungsgemäßen Heizeinheit erfolgt die Messung der Mediumstemperatur alternative oder zusätzlich mit einem integrierten Temperatursensor. Dieser kann beispielsweise als aufgelöteter NTC-Widerstand ausgeführt sein. Wird der Temperatursensor bei einem senkrechten Einbau der Heizeinheit, d. h. bei senkrechter Anordnung der Längsachse des Kernelements der Heizeinheit zur Standfläche des Gesamtsystems, möglichst hoch angeordnet, kann damit auch ein unsachgemäßer Betriebszustand wie etwas Trockenlaufen der Heizeinheit (d.h. ohne Wasser) erkannt werden.

In einer Weiterbildung der erfindungsgemäßen Heizeinheit sind die Funktionsschichten und/oder die Isolationsschicht(en) mit einem der folgenden Materialen oder einer wahlweisen Kombination zur Hydrophobisierung imprägniert: Siloxan, Silikonöl, Nano Coating, Aluminiumoxid-Suspension, Böhmit oder Ähnlichem. Besonders bevorzugt wird zur Imprägnierung Siloxan verwendet.

In einer Weiterbildung des Heizsystems ist wenigstens für die Funktionsschichten des Heizsystems einer Abdeckschicht vorgesehen. Die weinigstens eine Abdeckschicht weist bevorzugt eine Dicke im Bereich von 10 bis 200 µm auf. Besonders bevorzugt beträgt die Dicke der Abdeckschicht 20 µm. Die weinigstens eine Abdeckschicht besteht bevorzugt aus einem der folgenden Materialen oder einer wahlweisen Kombination davon: Polyetheretherketon (PEEK), Polytetrafluorethylen (PTFE), Polyphenylensulfid (PPS), Silikon, Silikonpolyester, Epoxid, PI oder Ähnlichem, wobei Silikon besonders bevorzugt wird.

Im Hinblick auf die Herstellung des Dickschichtheizsystems sei angemerkt, dass die Schichten des elektrischen Heizsystems mittels wenigstens einem Schicht bildenden Verfahren, bevorzugt mittels eines thermischen Spritzverfahren beispielsweise einem Lichtbogenspritzverfahren auf der Außenseite des Trägerrohrs erzeugt wird.

Wenigstens im Bereich der Funktionsschichten des Dickschichtaufbaus befindet sich auf dem Trägerrohr eine elektrische Isolierschicht, die beispielsweise mittels physikalischer Gasphasenabscheidung, Anodisieren, Hartanodisieren oder Oxidieren erzeugt wurde. Die wenigstens eine Heizleiterschicht sowie ggf. weitere Leiterbahnschichten sind darauf bevorzugt als Funktionsschicht mittels eines thermischen Spritzverfahren wie atmosphärisches Plasmaspritzen und Lichtbogenspritzen hergestellt. Bei der Herstellung werden die eine Funktionsschicht oder mehreren Funktionsschichten mittels Schicht bildender Verfahren vollflächig aufgetragen und anschließend mittels eines Abtragungsverfahren die Leiterbahnen in der jeweiligen Funktionsschicht strukturiert. Hierfür wird besonders bevorzugt Abtrag mittels Laser bzw. Wasserstrahl bzw. eine Kombination der Verfahren verwendet.

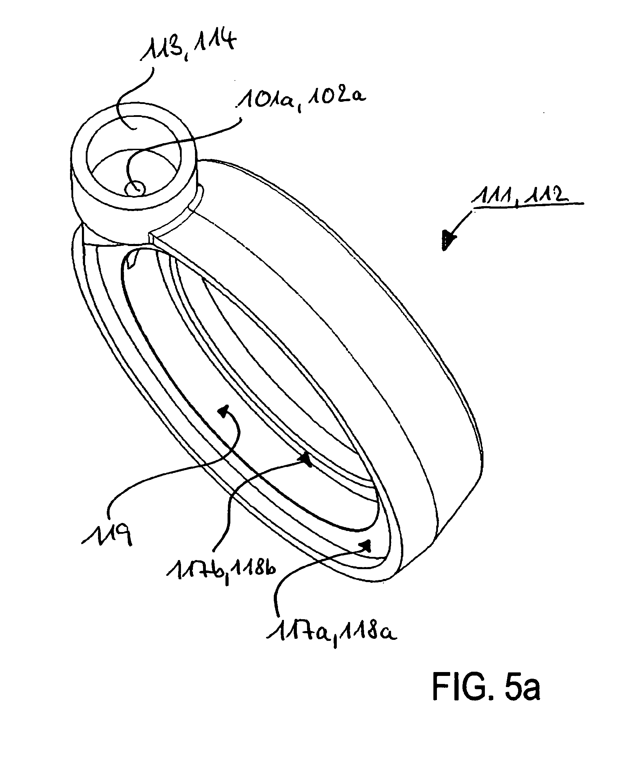

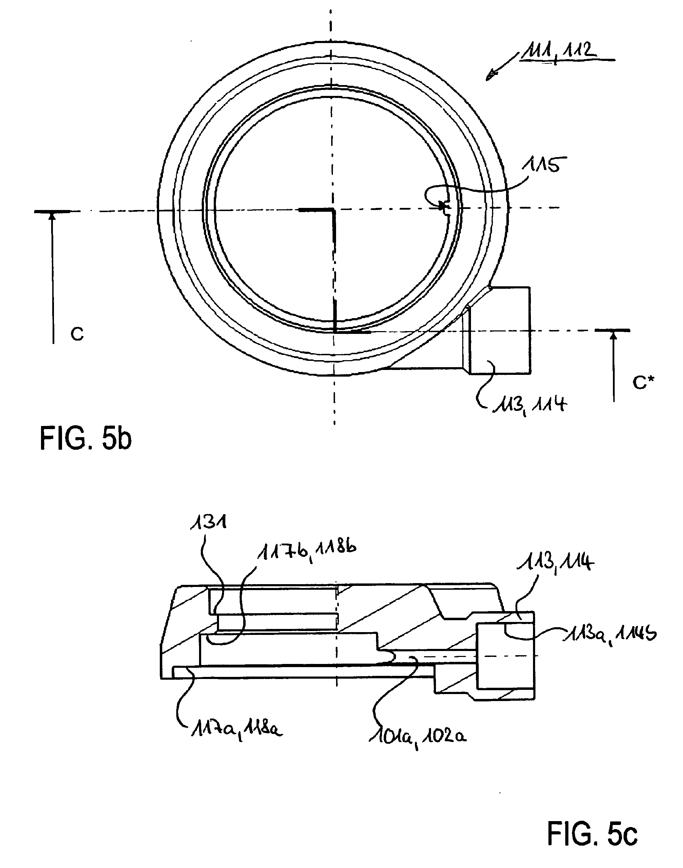

Fig. 5a zeigt eine dreidimensionale Ansicht eines der beiden in Fig. 1 gezeigten Deckel bzw. Endstücke 111 (bzw. 112) mit einer Anschlussstückaufnahme 113 (bzw. 114) für die Spiraldurchflusseinheit 100 der Fig. 1, wobei Fig. 5b eine Draufsicht auf den Deckel der Fig. 5a und Fig. 5c eine Längsschnittdarstellung entlang der Schnittfläche CC* durch den Deckel bzw. das Endstück 111 (bzw. 112) der Fig. 5a bzw. 5b zeigt.

Im Inneren des ringförmigen Deckels bzw. Endstücks 111 (bzw. 112) ist eine umlaufende Dichtfläche 117a bzw. 118a, die im zusammengebauten Zustand der Heizeinheit 100 zusammen mit einer zwischengelegten O-Ringdichtung als Dichtelement 151 bzw. 152 mit dem jeweiligen Flansch 143 bzw. 144 des rohrförmigen Trägers 140 eine für Wasser sowie Dampf undurchlässige Dichtung ausgebildet wird.

Weiter besitzt der ringförmigen Deckel in seinem Inneren eine zylindermantelförmige Innenfläche 119, deren Durchmesser im Wesentlichen dem Innendurchmesser des rohrförmigen Trägers 140 entspricht sowie dem Außendurchmesser des Kernelements 120, gemessen vom äußersten Punkt des Außen umlaufenden Steges 122 auf einer Seite zum äußersten Punkt des Steges 122 auf der gegenüberliegenden Seite, entspricht.

An der im Bezug auf das Kernelement 120 innen liegenden Seite wird die Innenfläche 119 des Deckels bzw. Endstücks 111 (bzw. 112) von der Dichtfläche 117a (bzw. 118a) und auf der anderen Seite von einer weiteren Dichtfläche 117b bzw. 118b begrenzt, die auch im Wesentlichen senkrecht zur Innenfläche 119 sowie parallel zur Dichtfläche 117a bzw. 118a über den gesamten Umfang des ringförmigen Deckels bzw. Endstücks 111, 112 verläuft.

Die zweite ebenfalls ringförmige Dichtfläche 117b, 118b bildet jeweils zusammen mit einer Stirnfläche 127 bzw. 128 des Kernelements 120 mittels zwischengelegter O-Ringdichtungen 153 bzw. 154 als Dichtungselemente eine weitere gegenüber Wasser bzw. Dampf dichtende Dichtung. Im Ergebnis ist damit der im Inneren der Heizeinheit 100 spiralförmig verlaufende Strömungskanal 126 an beiden Enden der Heizeinheit 100 jeweils mittels einer zwischen Trägerrohr 140 und einem Endstück 111 (bzw. 112) angeordneten Dichtung sowie mittels einer zwischen einer Stirnfläche 127 (bzw. 128) des Kernelement 120 sowie dem jeweiligen Deckel bzw. Endstück 111 bzw. 112 angeordneten Dichtung nach Außen hin gegen Austritt von sowohl Wasser bzw. Dampf abgedichtet.

Fig. 5b ist eine Draufsicht auf den Deckel bzw. das Endstück 111 bzw. 112, wobei die ringförmige Ausgestaltung sowie die tangentiale Orientierung der Anschlussstückaufnahme 113 (bzw. 114) zu erkennen ist. Weiter ist in Fig. 5b die an der Innenoberfläche des Deckels bzw. Endstücks 111 (bzw. 112) angeordnete Führungsnase 115 zu sehen, die eine vorbestimmte und orientierungsrichtige Montage mittels der zur Führungsnase korrespondierenden Ausnehmung 138 an dem Kernelement 120, wie in der Fig. 2a dargestellt, gewährleistet.

Fig. 5c zeigt eine Schnittansicht entlang der Schnittfläche CC*, deren Verlauf in Fig. 5b definiert ist, anhand derer im Wesentlichen der Aufbau eines ringförmigen Deckels bzw. Endstücks 111 (bzw. 112) etwas detaillierter gezeigt ist. Besonders gut zu erkennen ist die Ausführung der Anschlussstückaufnahme 113 bzw. 114 zu erkennen, in die entsprechende hydraulische Steckverbindungen für hochdruckgeeignete Schlauchverbindungen eingesetzt werden können sowie die Durchgangsbohrung 101a bzw. 102a für eine hydraulische Kommunikation einer angeschlossenen Schlauchverbindung mit dem Strömungskanal 126, wobei die Durchgangsbohrung im Wesentlichen tangential in den Strömungskanal 126 bei zusammengesetzter Heizeinheit 100 einmündet.

An dieser Stelle sie bezüglich des vorstehend detailliert besprochenen Ausführung einer Spiraldurchfluss-Heizeinheit 100 der Erfindung noch Folgendes angemerkt. Grundsätzlich kann der aus dem Kernelement 120 und den beiden Endstücken 111 und 112 gebildete Körper auch zweiteilig ausgeführt werden, wobei das dargestellte Kernelement mit einem Endstück als eine Einheit hergestellt werden, wodurch im Wesentlichen eine abzudichtende Schnittstelle, zwischen dem Kernelement und einem Endstück in Wegfall kommt. Selbstverständlich kann die eine für die Herstellbarkeit benötigte Unterteilung des aus den beiden Endstücken sowie dem Kernelement gebildeten Körper auch an anderer Stelle als hier beschrieben ausgeführt werden.

Auch ist es möglich die Federzungen mit den Rasthaken für die Schnappverbindung an dem einen oder beiden Endstücken und in der Innenoberfläche des Kernelements entsprechend umlaufende Kanten für das Eingreifen der Rasthaken zum Herstellen der Schnappverbindung vorzusehen. Dem Fachmann sind in Kenntnis der vorliegenden Erfindung sofort zahlreiche Modifikationen der beschriebenen Anordnung erkenntlich, die jedoch nicht von dem in den Ansprüchen definierten Prinzip der Erfindung abweichen.

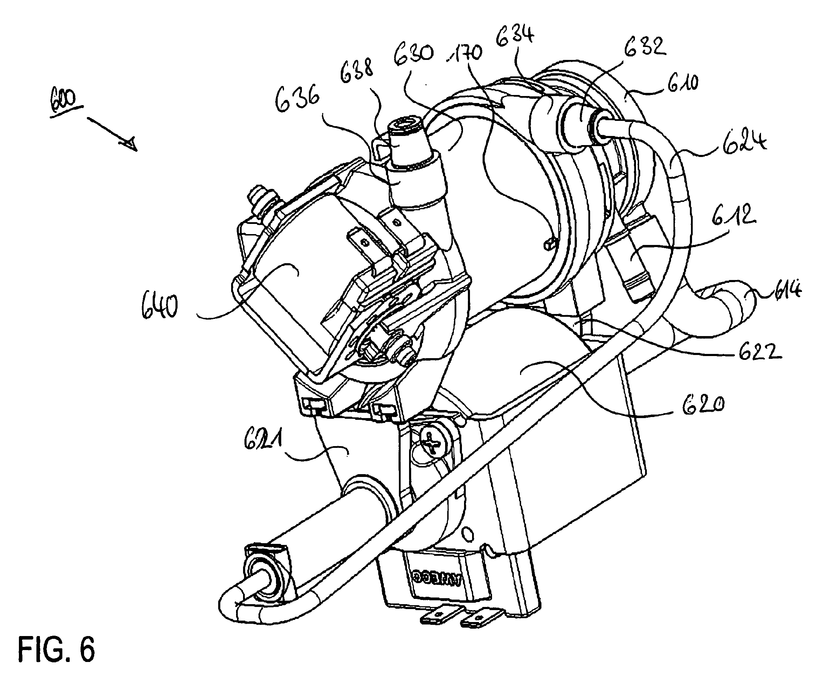

Fig. 6 zeigt ein erstes Ausführungsbeispiel eines hydraulischen Strangs, bei dem alle Systemkomponenten für ein vollständiges Heizsystemmodul 600 direkt an die erfindungsgemäße Spiraldurchfluss-Heizeinheit angebaut sind.

Dabei besteht der hydraulische Strang aus folgende Komponenten, wobei im Folgenden die Nennung in Durchflussrichtung erfolgt: Als erstes nach einem (nicht gezeigten) Wasservorratsbehälter oder einem beliebigem anderem Wasseranschluss befindet sich ein Durchflussmesser 610 mit einem entsprechenden Anschlussstück 612 für eine Schlauch. Mittels dem Durchflussmesser kann zum einen die benötigte Wassermenge bei der Zubereitung eines Heißgetränkes gemessen werden, aber mit dem Durchflussmesser kann auch eine einfache Absicherung der Heizeinheit gegen Trockenlaufen erfolgen, denn wenn der Durchflussmesser keinen Durchsatz anzeigt, deutet dies auf das Fehlende Wasser bzw. eine defekte Pumpe hin und die Heizeinheit kann automatisch abgeschaltet werden.

Nach dem Durchflussmesser 610 wird das Wasser über einen Verbindungsschlauch 614 zu einer elektro-mechanischen Pumpe 620 geführt, die für den Aufbau den benötigten Systemdrucks von 2,5 bis 3 bar für den Einsatz in Kaffeepad-Kaffeemaschinen bzw. für 13 bis 15 bar für den Einsatz in Espressomaschinen ausgelegt ist. Von der Pumpe 620 wird das Wasser unter Druck über eine entsprechend für Hochdruck geeignete Schlauchverbindung 622, zum Beispiel einen Teflonschlauch der Spiraldurchfluss-Heizeinheit 630 zugeführt. Der Schlauch wird dabei üblicherweise über eine bekannte hydraulische Steckverbindung 632 an den Zulaufanschluss 634 angeschlossen.

In der Spiraldurchflussheizung 630 wird das Wasser auf die benötigte Temperatur erhitzt, d. h. je nach Anwendung auf ca. 90°C bis 130°C und am dem Zulaufanschluss 634 gegenüber liegenden Ende über einen entsprechenden Ablaufanschluss 636 zu einer entsprechenden Baugruppe des Heißgetränkegeräts geführt. Dabei kann es sich um eine Brühgruppe bzw. einen Siebträger einer Espressomaschine oder einen Träger für Kaffeepads einer Kaffeepad-Kaffeemaschine oder eine Vorrichtung zum Aufschäumen von Milch oder Abgabestelle oder Abgabevorrichtung für Heißwasser oder Dampf sein. Schließlich ist noch ein elektrisch gesteuertes Dampfentspannungsventil 640 integriert, mittels dem nach Zubereitung eines Heißgetränks bzw. Bezug von Dampf oder Heißwasser das System drucklos gemacht bzw. entspannt werden kann.

Die oben genannten Systemkomponenten sind alle direkt an die gegenüber der Ausführung in den Fig. 1 bis 5 geringfügig modifizierten Spiraldurchfluss-Heizeinheit 630 der Erfindung angebaut.

Um Auswirkungen von mechanischen Schwingungen der Pumpe 620 im Betrieb einzudämmen bzw. zu entkoppeln, ist diese beispielsweise über Halterungen 621, 622 aus einem Schwingungen dämpfenden Material, wie zum Beispiel einem Elastomer oder einem anderem geeigneten elastischem Material, jeweils an den modifizierten Endstücken der Spiraldurchfluss-Heizeinheit 630 der Erfindung befestigt.

Das Heizsystemmodul 600 dient zur Brühung von Heißwasser und zur Dampferzeugung in Kaffeemaschinen, in erster Linie ist es zum Einbau in Espressomaschinen gedacht, wobei aufgrund des Aufbaus des erfindungsgemäßen Spiraldurchfluss-Heizeinheit hohe Drücke von über 15 bar, wie sie bei Espressomaschinen benötigt werden, kein Problem darstellen. Ein besonderer Vorteil der Anordnung besteht im kompakten montagefreundlichen Aufbau sowie der Möglichkeit Geräteherstellern ein komplettes und Raum sparendes Systemmodul aus einer Hand zur Verfügung stellen zu können.

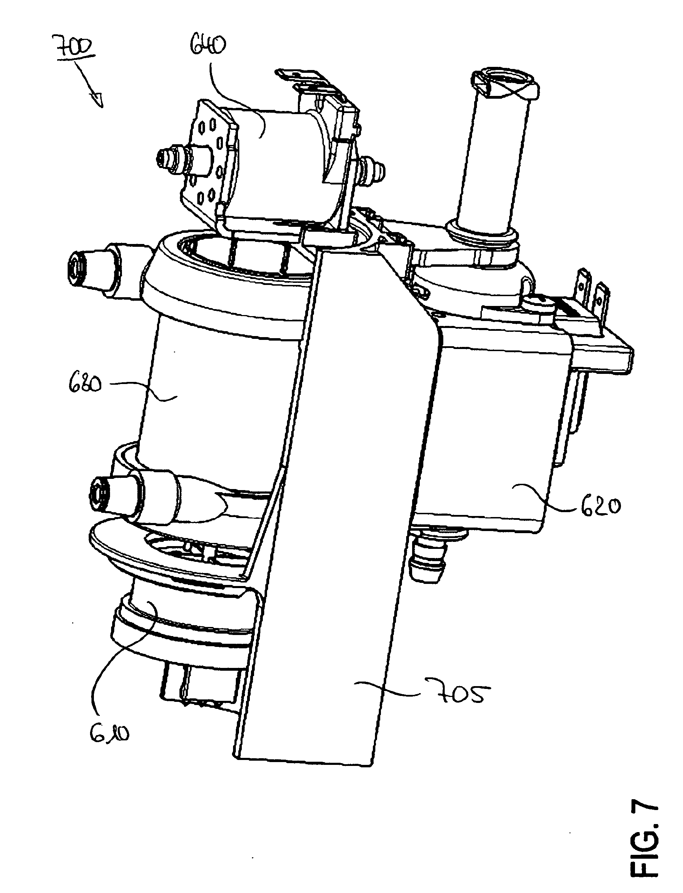

Fig. 7 zeigt ein zweites Ausführungsbeispiel eines hydraulischen Strangs, bei dem alle Systemkomponenten für das vollständige Heizsystemmodul 700 nicht direkt an die erfindungsgemäße Spiraldurchfluss-Heizeinheit angebaut sind, sondern jeweils an eine Montageschale 705 als Träger bzw. Halter. Die Montageschale 705 der an die individuell Einbausituation der jeweiligen Anwendung abgestimmt werden kann, aufgebaut sind. Ansonsten erfüllt die in Fig. 7 gezeigte Variante dieselben Zwecke wie die der Fig. 6 und bedarf daher nicht einer erneuten Beschreibung. Als besonderer Vorteil des Systems der Fig. 7 sei wieder den Platz sparenden und Montage freundlichen Aufbau sowie die individuelle Abstimmbarkeit der Montageschale als Schnittstelle zum Gerät, in welches das Modul eingebaut werden soll.

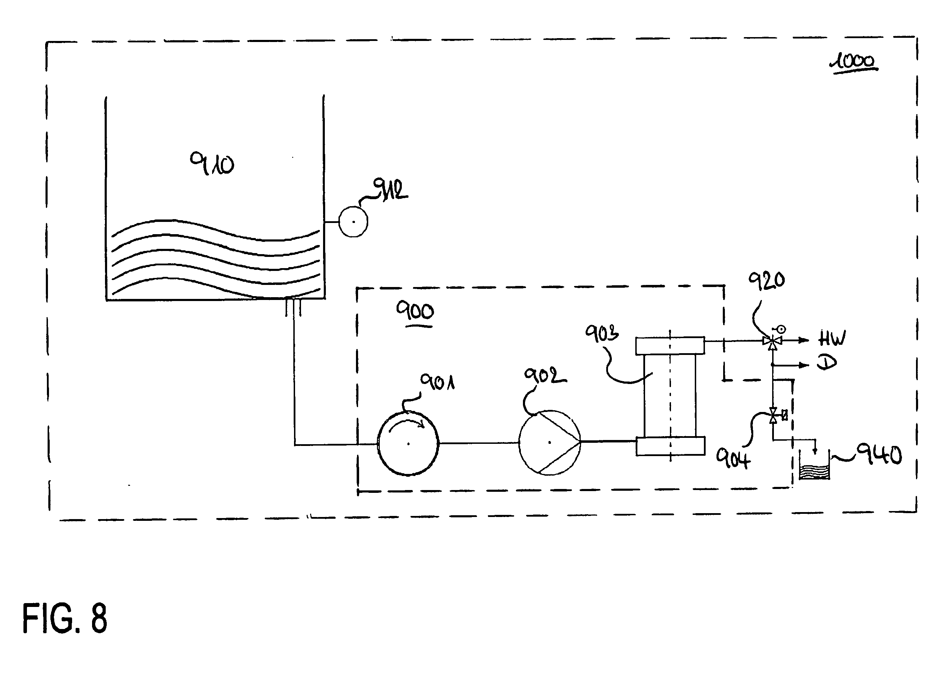

Im Zusammenhang mit den Systemen der Fig. 7 und 8 sei noch auf eine nicht näher dargestellte Weiterbildung hingewiesen, bei der im Inneren des Spiral-Durchflusserhitzers zur Verfügung stehenden Platz genutzt wird, indem Komponenten wie der Durchflussmesser und/oder das Dampfentspannungsventil und/oder die Pumpe im Inneren des Strömungskems angeordnet sind.

Fig. 9 zeigt einen schematischen Systemüberblick eines Heißwassergeräts 1000 mit einem Heizsystemmodul 900 der Erfindung. Ein Wasservorratsbehälter 910 ist an den Durchflussmesser des Heizsystemmodul 900 mit Durchflussmesser 901, Pumpe 902 Heizeinheit 903 sowie Dampfspannungsventil 904 angeschlossen, wobei an dem Wasservorratsbehälter 910 noch ein Wasserstandsmelder 912 als weitere Schutzmaßnahme gegen Trockenlaufen vorgesehen ist. Am Auslass des Heizsystemmodul 900 befindet sich ein Steuerventil 920, mittels dem das Heißgetränkegerät nach Wahl des Benutzers das erzeugte Heißwasser HW bzw. den erzeugten Dampf D die Weiterleitung zur jeweiligen Bedarfsstelle steuert. Schließlich ist noch das an den Dampfkreis angeschlossen Dampfentspannungsventil 904 mit entsprechendem Auffangbehältnis 940 angedeutet.

## Patentansprüche

1. Spiraldurchfluss-Heizeinheit für elektrische Geräte zur Bereitung von Heißgetränken aufweisend
einen rohrförmigen Träger (140) mit wenigstens einer elektrischen Heizleiterstruktur in Dickschichttechnik auf seiner Außenseite und je einem an seinen beiden Enden (141, 142) umlaufenden nach Außen weisenden Flansch (143, 144),
ein in dem rohrförmigen Träger (140) angeordnetes Kernelement (120) mit wenigstens einem auf der Mantelfläche des Kernelements (120) spiralförmig umlaufenden Steg (122), wobei zwei benachbarte Stegflanken (122a, 122b) mit der Mantelfläche eine Strömungsrille (124) bilden, die nach Außen durch die Innenseite (145) des rohrförmigen Trägers (140) im Wesentlichen dicht zu einem Strömungskanal (126) abgeschlossen ist,
ein erstes und ein zweites Endstück (111, 112) mit je einem mit dem Strömungskanal (126) kommunizierenden Anschluss (113, 114), wobei die Endstücke (111, 112) jeweils an ihrem Ende des rohrförmigen Trägers (140) mit dem Kernelement (120) fest verbunden sind, und
wobei die aus den Endstücken (111, 112) und dem Kernelement (120) bestehende Einheit aus wenigstens zwei Teilen besteht, die mittels wenigstens einer Schnappverbindung (131, 132) miteinander in Eingriff stehen und mechanisch derart verspannt sind, dass zwischen dem rohrförmigen Träger (140) und den jeweiligen Endstücken (111, 112) angeordnete Dichtungen (151, 152) mit einem ausreichenden Pressdruck belastet sind, sodass die Dichtungen (151, 152) wasser- und dampfdicht sind.

2. Spiraldurchfluss-Heizeinheit nach Anspruch 1, wobei die Steigung des spiralförmig umlaufenden Stegs (122) in Richtung des als Auslass dienenden Anschlusses (114) abnimmt, sodass die Breite (d1, d2, ..., d8, d9) der Strömungsrille (124) und somit der Querschnitt des Strömungskanals (126) zum Auslass (114) hin abnimmt.

3. Spiraldurchfluss-Heizeinheit nach einem der vorhergehenden Ansprüche,
wobei die wenigstens eine Schnappverbindung (131, 132) zwischen einem Ende des Kernelements (120) und einem dort angeordneten Endstück (111, 112) vorgesehen ist, oder wobei jeweils eine Schnappverbindung (131, 132) zwischen je einem Ende des Kernelements (120) und dem jeweils dort angeordneten Endstück (111, 112) vorgesehen ist.

4. Spiraldurchfluss-Heizeinheit nach einem der vorhergehenden Ansprüche,
wobei zwischen zugewandten Stirnflächen (117, 127; 118, 128) der wenigstens zwei Teile der aus den Endstücken (111, 112) und dem Kernelement (120) bestehende Einheit eine Dichtung (153, 154) angeordnet ist, die mittels der wenigsten einen Schnappverbindung (131, 132) mit einem ausreichenden Pressdruck belastet ist, damit die Dichtungen (153, 154) wasser- und dampfdicht ist.

5. Spiraldurchfluss-Heizeinheit nach einem der vorhergehenden Ansprüche,
wobei das Kernelement (120) innen hohl ist, sodass die Heizeinheit ein an wenigstens einem Ende offenes Rohr darstellt.

6. Spiraldurchfluss-Heizeinheit nach einem der vorhergehenden Ansprüche,
wobei Durchgangslöcher (101a, 102a) in jedem der Anschlüsse (113, 114) an dem jeweiligen Ende der Heizeinheit zur Kommunikation des dort jeweils endenden Strömungskanals (126) mit an den Anschlüssen angeordneten hydraulischen Anschlussstücken (161, 162) vorgesehen sind, wobei die Durchgangslöcher (101a, 102a) bevorzugt im Wesentlichen tangential im Bezug auf den rohrförmigen Träger (120) in den Strömungskanal (126) einlaufen.

7. Spiraldurchfluss-Heizeinheit nach einem der vorhergehenden Ansprüche,
wobei von den Enden wegweisenden Flanschflächen (143, 144) des rohrförmige Trägers (140) jeweils als erste Dichtflächen und entsprechende Auflageflächen (117a, 118a) in dem jeweiligen Endstück (111, 112) als jeweils zweite Dichtflächen zusammen mit jeweils dem dazwischen angeordneten Dichtelement (151, 152) eine erste und zweite Dichtung bilden.

8. Spiraldurchfluss-Heizeinheit nach einem der vorhergehenden Ansprüche,
wobei der rohrförmige Träger (140) aus einem ferritischen Edelstahl besteht, und wobei die Innenoberfläche (145) des rohrförmigen Trägers (140) bevorzugt mit einer Kalk abweisenden und/oder korrosionsbeständigen Beschichtung versehen ist.

9. Spiraldurchfluss-Heizeinheit nach einem der vorhergehenden Ansprüche,
wobei wenigstens im Bereich der elektrischen Heizleiterstruktur in Dickschichttechnik zwischen dem Material des rohrförmige Trägers (140) und der elektrischen Heizleiterstruktur eine elektrisch isolierende Schicht angeordnet ist, wobei bevorzugt auf dem rohrförmigen Träger (140) neben der elektrischen Heizleiterstruktur in Dickschichttechnik eine oder mehrere weitere Funktionsschichten vorgesehen sind, die als Leiterbahnschichten für elektrische Signale ausgeführt sind und die mit wenigstens einem Bauelement zur Absicherung, Überwachung, Steuerung, oder Regelung der Heizeinheit oder einer Kombination davon verschaltet sind,
wobei insbesondere wenigstens eine der weiteren Funktionsschichten in derselben durch die Heizleiterschicht definierten Schichtebene angeordnet ist, und wobei bevorzugt wenigstens ein Temperaturerfassungselement als ein Bauelement zur Absicherung gegen Überhitzung vorgesehen ist.

10. Spiraldurchfluss-Heizeinheit nach einem der vorhergehenden Ansprüche,
wobei zur Messung der Wassertemperatur in den Dickschichtaufbau auf dem Träger ein Temperatursensor integriert ist, insbesondere ein aufgelöteter NTC-Widerstand wobei der Temperatursensor bevorzugt im Wesentlichen über dem Strömungskanal (126) und nahe zum Auslass der Heizeinheit angeordnet ist, und wobei der Temperatursensor besonders bevorzugt im Bezug auf eine senkrechte Einbaulage der Heizeinheit, d. h. bei senkrechter Anordnung der Längsachse des Kernelements der Heizeinheit zur Standfläche des Gesamtsystems, an einer höchst möglichen Stelle an dem Träger angeordnet ist.

11. Spiraldurchfluss-Heizeinheit nach einem der vorhergehenden Ansprüche,
wobei die wenigstens einer elektrischen Heizleiterstruktur in Dickschichttechnik über einen auf dem rohrförmigen Träger angeordneten Steckverbinder kontaktierbar ist.

12. Spiraldurchfluss-Heizeinheit nach einem der vorhergehenden Ansprüche 9 bis 11, wobei die Leiterbahnschichten für elektrische Signale des wenigstens einen Bauelements zur Absicherung, Überwachung, Steuerung, oder Regelung der Heizeinheit oder einer Kombination davon sowie die wenigstens einer elektrischen Heizleiterstruktur in Dickschichttechnik über einen auf dem rohrförmigen Träger angeordneten Steckverbinder kontaktierbar sind.

13. Heizsystemmodul, das einem hydraulischen Strang mit einem Durchflussmesser, einer Pumpe einer Spiraldurchfluss-Heizeinheit nach einem der Ansprüche 1 bis 12, einem Dampfspannungsventil als Komponenten aufweist, wobei die Komponenten jeweils über druckbelastbare Schlauchverbindungen verbunden sind,
wobei die Pumpe im Wesentlichen über jeweils an den Endstücken der Spiraldurchfluss-Heizeinheit vorgesehenen Befestigungselementen parallel zu der Heizeinheit, und der Durchflussmesser sowie das Dampfspannungsventil jeweils im Bereich eines Endstücks angeordnet sind, oder
wobei die Komponenten mit einem gemeinsamen Trägerelement über jeweilige Befestigungselemente fest verbunden sind, wobei die Pumpe im Wesentlichen parallel zu der Heizeinheit, und der Durchflussmesser sowie das Dampfspannungsventil jeweils im Bereich eines Endstücks angeordnet sind.

14. Heizsystemmodul nach Anspruch 13, wobei der Durchflussmesser und/oder das Dampfspannungsventil teilweise oder ganz im Inneren des Kernelements der Spiraldurchfluss-Heizeinheit angeordnet sind.

15. Heizsystemmodul nach Anspruch 13, wobei die Pumpe im Inneren des Kernelements der Spiraldurchfluss-Heizeinheit angeordnet ist.

## Claims

1. Spiral continuous-flow heating unit for electrical appliances for preparing hot beverages, comprising a tubular support (140) having at least one thick-film electrical heating conductor structure on the outside thereof and a circumferential outward-facing flange (143, 144) at each of the two ends (141, 142) of the tubular support, a core element (120) arranged inside the tubular support (140), which core element has at least one helically extending web (122) on the external surface of the core element (120), two adjacent web edges (122a, 122b) and the external surface together forming a flow channel (124), which is substantially sealed off in an outwards direction with respect to a flow duct (126) by the inside (145) of the tubular support (140), a first and a second end piece (111, 112) each having a connector (113, 114) which communicates with the flow duct (126), the end pieces (111, 112) each being rigidly connected to the core element (120) at the respective end of the tubular support (140), and wherein the unit consisting of the end pieces (111, 112) and the core element (120) consists of at least two parts which engage one another by means of at least one snap-fit connection (131, 132) and are mechanically braced in such a way that seals (151, 152), which are arranged between the tubular support (140) and the respective end pieces (111, 112), are loaded with a sufficient applied pressure, in such a way that the seals (151, 152) are watertight and steam-tight.

2. Spiral continuous-flow heating unit according to claim 1, wherein the pitch of the helically extending web (122) decreases in the direction of the connector (114) which serves as an outlet, in such a way that the width (d1, d2, ..., d8, d9) of the flow channel (124) and thus the cross-section of the flow duct (126) decreases towards the outlet (114).

3. Spiral continuous-flow heating unit according to any one of the preceding claims, wherein the at least one snap-fit connection (131, 132) is provided between an end of the core element (120) and an end piece (111, 112) arranged thereon, or wherein a respective snap-fit connection (131, 132) is provided between each end of the core element (120) and the respective end piece (111, 112) arranged thereon.

4. Spiral continuous-flow heating unit according to any one of the preceding claims, wherein a seal (153, 154) is arranged between facing end faces (117, 127; 118, 128) of the at least two parts of the unit consisting of the end pieces (111, 112) and the core element (120), which seal is loaded with a sufficient applied pressure by means of the at least one snap-fit connection (131, 132), in such a way that the seals (153, 154) are watertight and steam-tight.

5. Spiral continuous-flow heating unit according to any one of the preceding claims, wherein the core element (120) is hollow inside, in such a way that the heating unit is a tube which is open at at least one end.

6. Spiral continuous-flow heating unit according to any one of the preceding claims, wherein through-holes (101a, 102a) are provided in each of the connectors (113, 114) at the respective end of the heating unit, in such a way that the flow duct (126) which ends here in each case communicates with hydraulic connector pieces (161, 162) arranged at the connectors, the through-holes (101a, 102a) preferably extending substantially tangentially in relation to the tubular support (120) in the flow duct (126).

7. Spiral continuous-flow heating unit according to any one of the preceding claims, wherein flange surfaces (143, 144) of the tubular support (140) which face away from the ends, respectively as first seal surfaces, and corresponding contact surfaces (117a, 118a) in the respective end piece (111, 112), as respective second seal surfaces, together with the respective seal element (151, 152) arranged therebetween, form a first and second seal.

8. Spiral continuous-flow heating unit according to any one of the preceding claims, wherein the tubular support (140) consists of a ferritic stainless steel, and wherein the inner surface (145) of the tubular support (140) is preferably provided with a lime-repellent and/or a corrosion-resistant coating.

9. Spiral continuous-flow heating unit according to any one of the preceding claims, wherein an electrically insulating layer is arranged at least in the region of the thick-film electrical heating conductor structure between the material of the tubular support (140) and the electrical heating conductor structure, one or more additional functional layers preferably being provided on the tubular support (140) in addition to the thick-film electrical heating conductor structure, which layers take the form of conductive strip layers for electrical signals and are connected to at least one component for protecting, monitoring, controlling or regulating the heating unit or for a combination thereof, in particular at least one of the additional functional layers being arranged in a layer plane defined by the heating conductive layer, and preferably at least a temperature detection element being provided to protect against overheating.

10. Spiral continuous-flow heating unit according to any of one the preceding claims, wherein a temperature sensor is integrated on the support, in particular an NTC resistor soldered thereon, to measure the water temperature in the thick-film construction, the temperature sensor preferably being arranged substantially above the flow duct (126) and close to the outlet of the heating unit, and the temperature sensor being particularly preferably arranged as high as possible on the support in relation to a vertical mounted position of the heating unit, that is to say in an arrangement of the longitudinal axis of the core element of the heating unit perpendicular to the base of the entire system.

11. Spiral continuous-flow heating unit according to any of one the preceding claims wherein the at least one thick-film electrical heating conductor structure can be electrically connected via a plug connection arranged on the tubular support.

12. Spiral continuous-flow heating unit according to any of one the preceding claims 9 to 11, wherein the conductive strip layers for electrical signals of the at least one component for protecting, monitoring, controlling or regulating the heating unit, or for a combination thereof, and the at least one thick-film electrical heating conductor structure can be electrically connected via a plug connection arranged on the tubular support.

13. Heating system module, which comprises, as components, a hydraulic line having a flow meter, a pump of a spiral continuous flow heating unit according to any one of claims 1 to 12 and a steam pressure valve, the components each being connected via pressure loadable hose connections, the pump being arranged substantially parallel to the heating unit via fixing elements provided on each of the end pieces of the spiral continuous-flow heating unit, and the flow meter and the steam pressure valve each being arranged in the region of an end piece, the components being rigidly connected to a common support element via respective fixing elements, the pump being arranged substantially parallel to the heating unit, and the flow meter and the steam pressure valve each being arranged in the region of an end piece.

14. Heating system module according to claim 13, wherein the flow meter and/or the steam pressure valve are arranged partially or completely inside the core element of the spiral continuous-flow heating unit.

15. Heating system module according to claim 13, wherein the pump is arranged inside the core element of the spiral continuous-flow heating unit.

## Revendications

1. Unité chauffante à écoulement en spirale pour des appareils électriques de préparation de boissons chaudes, comportant
un support (140) tubulaire ayant au moins une structure électrique chauffante en technique en couche épaisse sur son côté extérieur et respectivement une bride (143, 144) tournée vers l'extérieur et faisant le tour à ses deux extrémités (141, 142),
un élément (120) de noyau, qui est disposé dans le support (140) tubulaire et qui a au moins une nervure (122) faisant le tour en forme de spirale sur la surface latérale de l'élément (120) de noyau, deux flancs (122a, 122b) voisins de la nervure formant avec la surface latérale une rainure (124) d'écoulement, qui est fermée vers l'extérieur d'une manière sensiblement étanche en un canal (126) d'écoulement par le côté (145) intérieur du support (140) tubulaire,
un premier et un deuxième embouts (111, 112) ayant respectivement un raccord (113, 114) communiquant avec le canal (126) d'écoulement, les embouts (111, 112) étant reliés fixement à l'élément (120) de noyau respectivement à leur extrémité du support (140) tubulaire, et
dans laquelle l'unité constituée des embouts (111, 112) et de l'élément (120) de noyau est constituée d'au moins deux parties, qui sont en prise entre elles et bloquées mécaniquement au moyen d'une liaison (131, 132) à enclenchement, de manière à charger par une pression de poussée suffisante des joints (151, 152) montés entre le support (140) tubulaire et les embouts (111, 112) respectifs, de façon à ce que les joints (151, 152) soient étanches à l'eau et à la vapeur.

2. Unité chauffante à écoulement en spirale suivant la revendication 1, dans laquelle le pas de la nervure (122) faisant le tour en forme de spirale diminue dans la direction du raccord (114) servant de sortie, de sorte que la largeur (d1, d2, ..., d8, d9) de la rainure (124) d'écoulement, et ainsi de la section transversale du canal (126) d'écoulement, diminue en direction de la sortie (114) .

3. Unité chauffante à écoulement en spirale suivant l'une des revendications précédentes, dans laquelle la au moins une liaison (131, 132) à enclenchement est prévue entre une extrémité de l'élément (120) de noyau et un embout (111, 112) qui y est disposé ou dans laquelle il est prévu respectivement une liaison (131, 132) à enclenchement entre respectivement une extrémité de l'élément (120) de noyau et l'embout (111, 112) qui y est monté respectivement.

4. Unité chauffante à écoulement en spirale suivant l'une des revendications précédentes, dans laquelle, entre des surfaces (117, 127; 118, 128) frontales tournées l'une vers l'autre des au moins deux parties de l'unité constituée des embouts (111, 112) et de l'élément (120) de noyau, est disposé un joint (153, 154), qui est chargé d'une pression de poussée suffisante au moyen de la au moins une liaison (131, 132) à enclenchement, de sorte que les joints (153, 154) soient étanches à l'eau et à la vapeur.

5. Unité chauffante à écoulement en spirale suivant l'une des revendications précédentes, dans laquelle l'élément (120) de noyau est creux à l'intérieur, de sorte que l'unité chauffante constitue un tube ouvert, au moins à une extrémité.

6. Unité chauffante à écoulement en spirale suivant l'une des revendications précédentes, dans laquelle il est prévu des trous (101a, 102a) de passage dans chacun des raccords (113, 114) à l'extrémité respective de l'unité chauffante, pour la communication du canal (126) d'écoulement qui s'y termine respectivement avec des pièces (161, 162) hydrauliques de raccordement montées sur les raccords, les trous (101a, 102a) de passage pénétrant dans le canal (126) d'écoulement, de préférence sensiblement tangentiellement par rapport au support (120) tubulaire.

7. Unité chauffante à écoulement en spirale suivant l'une des revendications précédentes, dans laquelle des surfaces (143, 144) de bride, s'éloignant des extrémités, du support (140) tubulaire forment, respectivement en tant que premières surfaces d'étanchéité et que surfaces (117a, 118a) d'application correspondantes dans l'embout (111, 112) respectif en tant que respectivement deuxièmes surfaces d'étanchéité, ensemble avec respectivement l'élément (151, 152) d'étanchéité disposé entre eux, un premier et un deuxième joints.

8. Unité chauffante à écoulement en spirale suivant l'une des revendications précédentes, dans laquelle le support (140) tubulaire est en un acier fin ferritique et la surface (145) intérieure du support (140) tubulaire est pourvue, de préférence, d'un revêtement repoussant le calcaire et/ou résistant à la corrosion.

9. Unité chauffante à écoulement en spirale suivant l'une des revendications précédentes, dans laquelle, au moins dans la zone de la structure électrique chauffante en technique en couche épaisse, entre la matière du support (140) tubulaire et la structure électrique chauffante, est disposée une couche isolante du point de vue électrique, dans laquelle il est prévu, de préférence, sur le support (140) tubulaire à côté de la structure électrique chauffante en technique en couche épaisse, une ou plusieurs autres couches fonctionnelles, qui sont réalisées en couches à piste conductrice pour des signaux électriques et qui sont câblées avec au moins un composant pour la protection, la commande ou la régulation de l'unité de chauffage ou pour l'une de leurs combinaisons, dans laquelle au moins l'une des autres couches fonctionnelles est disposée dans le même plan de couche que celui défini par la couche chauffante et dans laquelle, de préférence, au moins un élément relevant la température est prévu comme composant de protection à l'encontre d'une surchauffe.

10. Unité chauffante à écoulement en spirale suivant l'une des revendications précédentes, dans laquelle, pour mesurer la température de l'eau dans la structure en couche épaisse, il est intégré sur le support un capteur de température, notamment une résistance NTC brasée, le capteur de température étant disposé, de préférence, sensiblement sur le canal (126) d'écoulement et près de la sortie de l'unité chauffante, et dans laquelle le capteur de température est disposé, d'une manière particulièrement préférée, par rapport à une position de montage verticale de l'unité chauffante, c'est-à-dire lorsque l'axe longitudinal de l'élément de noyau de l'unité chauffante est vertical par rapport à la surface d'encombrement de tout le système, en un point le plus haut possible sur le support.

11. Unité chauffante à écoulement en spirale suivant l'une des revendications précédentes, dans laquelle la au moins une structure électrique chauffante en technique en couche épaisse peut être mise en contact par un connecteur monté sur le support tubulaire.

12. Unité chauffante à écoulement en spirale suivant l'une des revendications précédentes 9 à 11, dans laquelle les couches à piste conductrice pour des signaux électriques du au moins un composant pour la protection, le contrôle, la commande ou la régulation de l'unité chauffante ou pour l'une de leurs combinaisons ainsi que la au moins une structure électrique chauffante en technique en couche épaisse peuvent être mises en contact par un connecteur monté sur le support tubulaire.

13. Module de système de chauffage, qui comprend un tronçon hydraulique ayant un débitmètre, une pompe, une unité chauffante à écoulement en spirale suivant l'une des revendications 1 à 12, une soupape de pression de vapeur comme composants, les composants étant reliés respectivement par des liaisons par conduits souples pouvant supporter la pression,
dans lequel la pompe est disposée sensiblement, par respectivement des éléments de fixation prévus aux embouts de l'unité chauffante à écoulement en spirale, parallèlement à l'unité chauffante et le débitmètre ainsi que la soupape de pression de la vapeur sont disposés respectivement dans la zone d'un embout, ou
dans lequel les composants sont reliés rigidement à un élément support commun par des éléments de fixation respectifs, la pompe étant disposée sensiblement parallèlement à l'unité chauffante et le débitmètre ainsi que la soupape de pression de la vapeur étant disposés respectivement dans la zone d'un embout.

14. Module de système de chauffage suivant la revendication 13, dans lequel le débitmètre et/ou la soupape de pression de la vapeur sont disposés en tout ou partie à l'intérieur de l'élément de noyau de l'unité chauffante à écoulement en spirale.

15. Module de système de chauffage suivant la revendication 13, dans lequel la pompe est disposée à l'intérieur de l'élément de noyau de l'unité chauffante à écoulement en spirale.
